# EUROPEAN PATENT APPLICATION

(11) **EP 4 741 645 A1**
(43) Date of publication of application: **13.05.2026**
(21) Application number: 25213510.8
(22) Date of filing: 04.11.2025
(51) Int. Cl.: F02C 6/08, F02C 9/18, F02K 3/06, F02K 3/075, F04D 27/02

(54) **BLEED VALVE SYSTEM FOR GAS TURBINE ENGINE**

(30) Priority: 08.11.2024 US 202463718311 P; 31.03.2025 US 202519095101
(71) Applicant: General Electric Company, Cincinnati, Ohio 45215 (US)
(72) Inventor: BOWDEN, William Joseph, Evendale, 45241 (US); OSTDIEK, David Marion, Evendale, 45241 (US); MCKNIGHT, Ian, Evendale, 45241 (US); KHALID, Syed, Evendale, 45215 (US)
(74) Representative: Openshaw & Co.

(57) **Abstract**

A bleed valve system (80, 200, 300) for a gas turbine engine (10, 100, 100', 210, 240, 270), the bleed valve system (80, 200, 300) including a bleed valve (202, 202', 82, 222, 252, 262, 274, 310), a bleed valve exhaust duct (204, 304) fluidly connected to the bleed valve (202, 202', 82, 222, 252, 262, 274, 310), and a bleed valve exhaust nozzle (206, 306) fluidly connected to the bleed valve exhaust duct (204, 304), wherein the bleed valve exhaust duct (204, 304) and the bleed valve exhaust nozzle (206, 306) are fluidly separated from an exhaust nozzle of the gas turbine engine (10, 100, 100', 210, 240, 270) when the bleed valve system (80, 200, 300) is installed in the gas turbine engine (10, 100, 100', 210, 240, 270).

## Description

### CROSS-REFERENCE TO RELATED APPLICATIONS

This application is a non-provisional application claiming the benefit of priority under 35 U.S.C. § 119(e) to U.S. Provisional Application No. 63/718,311, filed November 8, 2024, which is hereby incorporated by reference in its entirety.

### FIELD

The present disclosure relates to a bleed valve system for a gas turbine engine.

### BACKGROUND

Gas turbine engines generally include a turbomachine, the turbomachine including, in serial flow order, a compressor section, a combustion section, a turbine section, and an exhaust section. In operation, air is provided to an inlet of the compressor section where one or more axial compressors progressively compress the air until it reaches the combustion section. Fuel is mixed with the compressed air and burned within the combustion section to provide combustion gases. The combustion gases are routed from the combustion section to the turbine section. The flow of combustion gases through the turbine section drives the turbine section and is then routed through the exhaust section, e.g., to atmosphere.

### BRIEF DESCRIPTION OF THE DRAWINGS

A full and enabling disclosure of the present disclosure, including the best mode thereof, directed to one of ordinary skill in the art, is set forth in the specification, which makes reference to the appended figures, in which:
FIG. 1 is a schematic view of an exemplary gas turbine engine.
FIG. 2 is a magnified view of the exemplary gas turbine engine of FIG. 1 illustrating a bleed valve system.
FIG. 3 is a schematic view of another exemplary gas turbine engine.
FIG. 4 is a magnified view of the exemplary gas turbine engine of FIG. 3 illustrating another bleed valve system.
FIG. 5 is a magnified view of the exemplary gas turbine engine of FIG. 3 illustrating another bleed valve system.
FIG. 6 is a schematic view of the exemplary gas turbine engine of FIG. 3 illustrating a passage connecting multiple streams.
FIG. 7 is a schematic view of the exemplary gas turbine engine of FIG. 3 illustrating another passage connecting multiple streams.
FIG. 8A is a magnified view of the passage of FIG. 7 illustrating a flow regulator.
FIG. 8B is a magnified view of the passage of FIG. 7 illustrating another flow regulator.
FIG. 9 is a schematic view of the exemplary gas turbine engine of FIG. 3 illustrating another passage connecting multiple streams.
FIG. 10 is a perspective schematic view of a bleed valve system with a bleed valve exhaust duct including a plurality of discrete ducts.
FIG. 11 is a top-down view of one of the discrete ducts of FIG. 10 along the line 11-11.

### DETAILED DESCRIPTION

Reference will now be made in detail to present embodiments of the disclosure, one or more examples of which are illustrated in the accompanying drawings. The detailed description uses numerical and letter designations to refer to features in the drawings. Like or similar designations in the drawings and description have been used to refer to like or similar parts of the disclosure.

The word "exemplary" is used herein to mean "serving as an example, instance, or illustration." Any implementation described herein as "exemplary" is not necessarily to be construed as preferred or advantageous over other implementations. Additionally, unless specifically identified otherwise, all embodiments described herein should be considered exemplary.

The singular forms "a", "an", and "the" include plural references unless the context clearly dictates otherwise.

The term "at least one of" in the context of, e.g., "at least one of A, B, and C" refers to only A, only B, only C, or any combination of A, B, and C.

An "exhaust nozzle" refers to any nozzle that exhausts gases from a gas turbine engine, such as a fan exhaust nozzle or a turbomachine exhaust nozzle.

The terms "upstream" and "downstream" refer to the relative direction with respect to fluid flow in a fluid pathway. For example, "upstream" refers to the direction from which fluid flows, and "downstream" refers to the direction to which the fluid flows.

In this context, a "nozzle" is an opening or structure that directs air flow away from a gas turbine engine with at least some thrust output. In general, a nozzle outputs air flow substantially parallel to a direction of flight.

The present disclosure is generally related to operation of a turbomachine of a gas turbine engine. Booster and compressor architectures for improved performance may require the booster to have a portion of the flow bled at low power conditions, such as idle. This flow is called "variable bleed valve" (VBV) or "bleed valve" flow. Gas turbine engines can exhaust VBV flow into an alternate turbomachinery exhaust stream, such as the fan stream or bypass stream for ducted turbofans.

Such exhausting can create various integration challenges. In some forms, exhausting the VBV flow into an alternate exhaust stream reduces turbomachinery operability, increases acoustics, or increases engine weight. For example, exhausting VBV flow into a third stream of an open rotor engine presents operability challenges for turbomachinery in the third stream that is upstream of the VBV flow. Exhausting into the core stream downstream of the turbines or into ambient air presents weight, integration, aerodynamic performance, and acoustical challenges.

By exhausting VBV flow into a dedicated exhaust stream and nozzle that has no corresponding turbomachinery, the complex integration challenges with turbomachinery are reduced or eliminated, and the system can improve efficiency of spatial packaging. In particular, exhausting the VBV flow into a dedicated nozzle enables simpler execution for turbomachinery operability, spatial integration, and potentially other metrics. Additionally, the dedicated exhaust stream and nozzle can allow for improvement of ducted fans in a three-stream engine, particularly when sizing nozzles for cruise operation. The dedicated VBV exhaust duct may be spatially efficient to package, and aerodynamic performance of the three-stream engine may have low sensitivity to substantial increases in VBV flow requirements. Output thrust may be improved, which reduces fuel consumption during transient operating conditions, such as takeoff and landing. Additionally, the VBV flow is continuous, which may meet cycle performance when combined with a booster of an increased size.

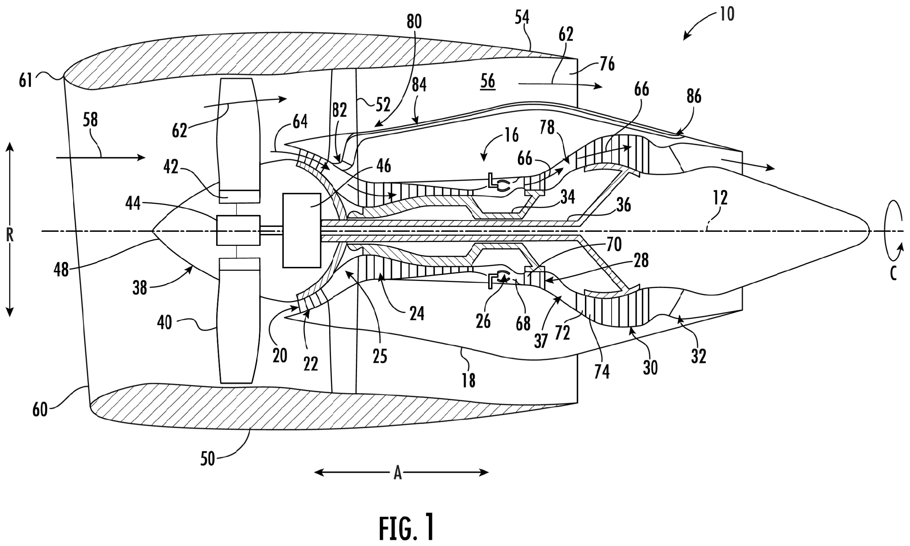

Referring now to the drawings, wherein identical numerals indicate the same elements throughout the figures, FIG. 1 is a schematic cross-sectional view of a gas turbine engine in accordance with an exemplary embodiment of the present disclosure. More particularly, for the embodiment of FIG. 1, the gas turbine engine is a high-bypass turbofan jet engine, sometimes also referred to as a "turbofan engine." As shown in FIG. 1, the gas turbine engine 10 defines an axial direction A (extending parallel to a longitudinal centerline 12 provided for reference), a radial direction R, and a circumferential direction C extending about the longitudinal centerline 12. In general, the gas turbine engine 10 includes a fan section 14 and a turbomachine 16 disposed downstream from the fan section 14.

The exemplary turbomachine 16 depicted generally includes a substantially tubular outer casing 18 that defines an annular inlet 20. The outer casing 18 encases, in serial flow relationship, a compressor section including a booster or low pressure (LP) compressor 22, a high pressure (HP) compressor 24, and a core duct 25 between the LP compressor 22 and the HP compressor 24; a combustion section 26; a turbine section including a high pressure (HP) turbine 28 and a low pressure (LP) turbine 30; and a turbomachine exhaust nozzle 32. A high pressure (HP) shaft 34 (which may additionally or alternatively be a spool) drivingly connects the HP turbine 28 to the HP compressor 24. A low pressure (LP) shaft 36 (which may additionally or alternatively be a spool) drivingly connects the LP turbine 30 to the LP compressor 22. The compressor section, combustion section 26, turbine section, and turbomachine exhaust nozzle 32 together define a working gas flowpath 37.

For the embodiment depicted, the fan section 14 includes a fan 38 having a plurality of fan blades 40 coupled to a disk 42 in a spaced apart manner. As depicted, the fan blades 40 extend outwardly from disk 42 generally along the radial direction R. Each fan blade 40 is rotatable relative to the disk 42 about a pitch axis P by virtue of the fan blades 40 being operatively coupled to a suitable pitch change mechanism 44 configured to collectively vary the pitch of the fan blades 40, e.g., in unison. The gas turbine engine 10 further includes a power gear box 46, and the fan blades 40, disk 42, and pitch change mechanism 44 are together rotatable about the longitudinal centerline 12 by LP shaft 36 across the power gear box 46. The power gear box 46 includes a plurality of gears for adjusting a rotational speed of the fan 38 relative to a rotational speed of the LP shaft 36, such that the fan 38 may rotate at a more efficient fan speed.

Referring still to the exemplary embodiment of FIG. 1, the disk 42 is covered by rotatable front hub 48 of the fan section 14 (sometimes also referred to as a "spinner"). The front hub 48 aerodynamically contoured to promote an airflow through the plurality of fan blades 40.

Additionally, the exemplary fan section 14 includes an annular fan casing or outer nacelle 50 that circumferentially surrounds the fan 38 and/or at least a portion of the turbomachine 16. It should be appreciated that the nacelle 50 is supported relative to the turbomachine 16 by a plurality of circumferentially-spaced outlet guide vanes 52 in the embodiment depicted. Moreover, a downstream section 54 of the nacelle 50 extends over an outer portion of the turbomachine 16 so as to define a bypass airflow passage 56 therebetween.

During operation of the gas turbine engine 10, a volume of air 58 enters the gas turbine engine 10 through an associated inlet 60 of the nacelle 50 and fan section 14. As the volume of air 58 passes across the fan blades 40, a first portion 62 of air is directed or routed into the bypass airflow passage 56 and a second portion 64 of air as indicated by an arrow is directed or routed into the working gas flowpath 37, or more specifically into the LP compressor 22. The ratio between the first portion 62 of air and the second portion 64 of air is commonly known as a bypass ratio. A pressure of the second portion 64 of air is then increased as it is routed through the HP compressor 24 and into the combustion section 26, where it is mixed with fuel and burned to provide combustion gases 66.

The combustion gases 66 are routed through the HP turbine 28 where a portion of thermal and/or kinetic energy from the combustion gases 66 is extracted via sequential stages of HP turbine stator vanes 68 that are coupled to the outer casing 18 and HP turbine rotor blades 70 that are coupled to the HP shaft 34, thus causing the HP shaft 34 to rotate, thereby supporting operation of the HP compressor 24. The combustion gases 66 are then routed through the LP turbine 30 where a second portion of thermal and kinetic energy is extracted from the combustion gases 66 via sequential stages of LP turbine stator vanes 72 that are coupled to the outer casing 18 and LP turbine rotor blades 74 that are coupled to the LP shaft 36, thus causing the LP shaft 36 to rotate, thereby supporting operation of the LP compressor 22 and/or rotation of the fan 38.

The combustion gases 66 are subsequently routed through the turbomachine exhaust nozzle 32 of the turbomachine 16 to provide propulsive thrust. Simultaneously, the pressure of the first portion 62 of air is substantially increased as the first portion 62 of air is routed through the bypass airflow passage 56 before it is exhausted from a fan exhaust nozzle 76 of the gas turbine engine 10, also providing propulsive thrust. The HP turbine 28, the LP turbine 30, and the turbomachine exhaust nozzle 32 at least partially define a hot gas path 78 for routing the combustion gases 66 through the turbomachine 16.

The engine 10 includes a bleed valve system 80. The bleed valve system 80 bleeds air from the turbomachine 16 between the LP compressor 22 and the HP compressor 24. That is, during operation of the gas turbine engine 10, more air may be compressed by the LP compressor 22 than the HP compressor 24 may compress, resulting in reduced performance by the turbomachine 16. Allowing some of the air to be removed from the core duct 25 between the LP compressor 22 and the HP compressor 24 (i.e., "bleeding" the air) allows the HP compressor 24 to operate more stably and efficiently. The bleed valve system 80 includes a bleed valve 82, a bleed valve exhaust duct 84 fluidly connected to the bleed valve 82, and a bleed valve exhaust nozzle 86 fluidly connected to the bleed valve exhaust duct 84. In some contexts, the bleed valve system 80 may be referred to as a "variable" bleed valve (VBV) system, where the amount of air bled from the core duct 25 can vary or be controlled.

It should be appreciated, however, that the exemplary gas turbine engine 10 depicted in FIG. 1 is by way of example only, and that in other exemplary embodiments, the gas turbine engine 10 may have any other suitable configuration. For example, although the gas turbine engine 10 depicted is configured as a ducted gas turbine engine (i.e., including the outer nacelle 50), in other embodiments, the gas turbine engine 10 may be an unducted gas turbine engine (such that the fan 38 is an unducted fan, and the outlet guide vanes 52 are cantilevered from the outer casing 18).

Additionally, or alternatively, although the gas turbine engine 10 depicted is configured as a geared gas turbine engine (i.e., including the power gear box 46) and a variable pitch gas turbine engine (i.e., including a fan 38 configured as a variable pitch fan), in other embodiments, the gas turbine engine 10 may additionally or alternatively be configured as a direct drive gas turbine engine (such that the LP shaft 36 rotates at the same speed as the fan 38), as a fixed pitch gas turbine engine (such that the fan 38 includes fan blades 40 that are not rotatable about a pitch axis P), or both. It should also be appreciated, that in still other exemplary embodiments, aspects of the present disclosure may be incorporated into any other suitable gas turbine engine. For example, in other exemplary embodiments, aspects of the present disclosure may (as appropriate) be incorporated into, e.g., a turboprop gas turbine engine, a turboshaft gas turbine engine, or a turbojet gas turbine engine.

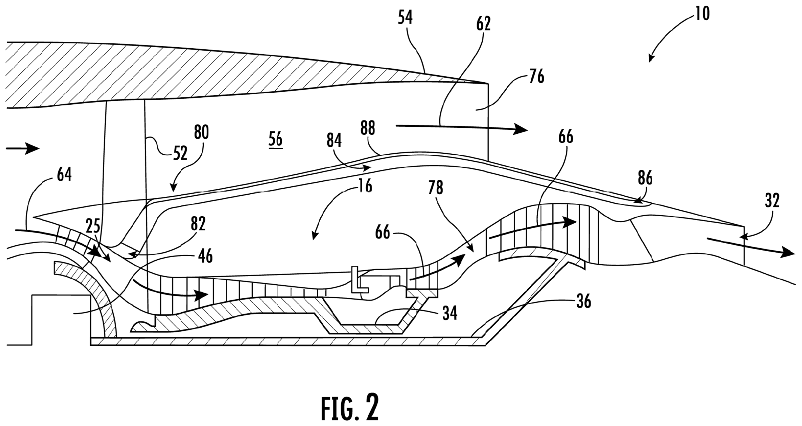

Now referring to FIG. 2, a magnified view of the gas turbine engine 10 is shown illustrating the bleed valve system 80. The bleed valve 82 receives air from the core duct 25 and transmits the air to the bleed valve exhaust duct 84. The bleed valve 82 may be any suitable type, such as a rotating door, a sliding door, a solenoid, or combinations thereof. The bleed valve exhaust duct 84 may, as shown in FIG. 2, extend along an outer surface 88 of the outer casing 18, transmitting air away from the core duct 25. Extending the bleed valve exhaust duct 84 along the outer surface 88 may reduce installation complexity of the bleed valve exhaust duct 84 in the turbomachine 16 by maximizing space within the outer casing 18, addressing space constraints in the gas turbine engine 10. It will be appreciated that the bleed vale exhaust duct 84 may extend from the core duct 25 through the outer casing 18 to the bleed valve exhaust nozzle 86 in any suitable arrangement.

The bleed valve exhaust nozzle 86 allows air to flow from the bleed valve exhaust duct 84 out of the turbomachine 16. To prevent air from the bleed valve exhaust duct 84 from mixing with air from other parts of the turbomachine 16, the bleed valve exhaust duct 84 and the bleed valve exhaust nozzle 86 are fluidly separated from the turbomachine exhaust nozzle 32 and the fan exhaust nozzle 76. In particular, the bleed valve exhaust nozzle 86 may be downstream of the fan exhaust nozzle 76 to allow the first portion 62 of air to exit the downstream section 54 of the gas turbine engine 10. Alternatively, the bleed valve exhaust nozzle 86 may be positioned at any suitable position, including in line with the fan exhaust nozzle 76, so long as the separation of the bleed valve exhaust nozzle 86 from the fan exhaust nozzle 76 reduces or inhibits interference between air output of the bleed valve exhaust nozzle 86 and the fan exhaust nozzle 76. The bleed valve exhaust nozzle 86 may be fluidly isolated from the turbomachine exhaust nozzle 32 and the fan exhaust nozzle 76, such that no air from the bleed valve exhaust duct 84 may obstruct the exhausting of air from the bypass airflow passage 56 and no air from the bypass airflow passage 56 may obstruct the exhausting air from the bleed valve exhaust duct 84.

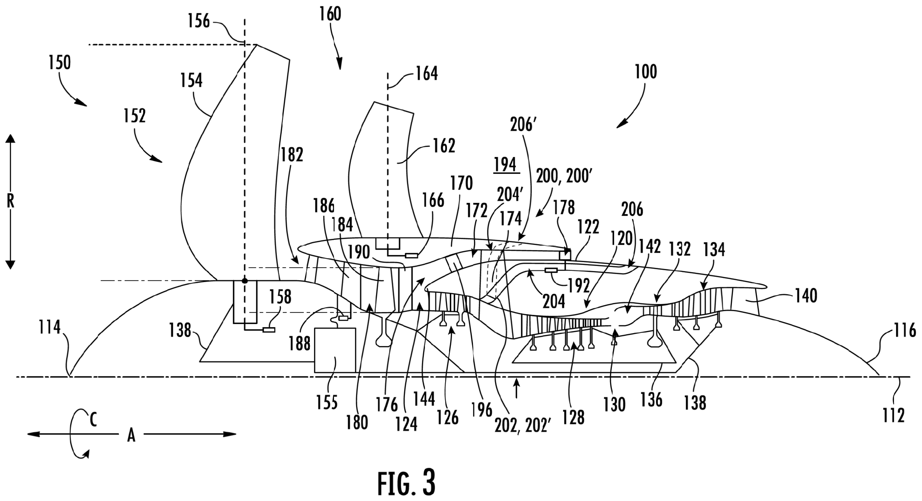

Referring now to FIG. 3, a schematic cross-sectional view of another gas turbine engine 100 is provided according to an example embodiment of the present disclosure. Particularly, FIG. 3 provides a turbofan engine having a rotor assembly with a single stage of unducted rotor blades. In such a manner, the rotor assembly may be referred to herein as an "unducted fan," or the entire gas turbine engine 100 may be referred to as an "unducted turbofan engine." In addition, the gas turbine engine 100 of FIG. 3 includes a third stream extending from the compressor section to a rotor assembly flowpath over the turbomachine, as will be explained in more detail below.

For reference, the gas turbine engine 100 defines an axial direction A, a radial direction R, and a circumferential direction C. Moreover, the gas turbine engine 100 defines an axial centerline or longitudinal axis 112 that extends along the axial direction A. In general, the axial direction A extends parallel to the longitudinal axis 112, the radial direction R extends in a direction orthogonal to the axial direction A, and the circumferential direction extends three hundred sixty degrees (360°) around the longitudinal axis 112. The gas turbine engine 100 extends between a forward end 114 and an aft end 116, e.g., along the axial direction A.

The gas turbine engine 100 includes a turbomachine 120 and a rotor assembly, also referred to a fan section 150, positioned upstream thereof. Generally, the turbomachine 120 includes, in serial flow order, a compressor section, a combustion section, a turbine section, and an exhaust section. Particularly, as shown in FIG. 3, the turbomachine 120 includes a core cowl 122 that defines a core inlet 124. The core cowl 122 further encloses at least in part a low pressure system and a high pressure system. For example, the core cowl 122 depicted encloses and supports at least in part a booster or low pressure ("LP") compressor 126 for pressurizing the air that enters the turbomachine 120 through core inlet 124. A high pressure ("HP"), multi-stage, axial-flow compressor 128 receives pressurized air from the LP compressor 126 and further increases the pressure of the air. The pressurized air stream flows downstream to a combustor 130 of the combustion section where fuel is injected into the pressurized air stream and ignited to raise the temperature and energy level of the pressurized air.

It will be appreciated that as used herein, the terms "high/low speed" and "high/low pressure" are used with respect to the high pressure/high speed system and low pressure/low speed system interchangeably. Further, it will be appreciated that the terms "high" and "low" are used in this same context to distinguish the two systems, and are not meant to imply any absolute speed and/or pressure values.

The high energy combustion products flow from the combustor 130 downstream to a high pressure turbine 132. The high pressure turbine 132 drives the high pressure compressor 128 through a high pressure shaft 136. In this regard, the high pressure turbine 132 is drivingly coupled with the high pressure compressor 128. The high energy combustion products then flow to a low pressure turbine 134. The low pressure turbine 134 drives the low pressure compressor 126 and components of the fan section 150 through a low pressure shaft 138. In this regard, the low pressure turbine 134 is drivingly coupled with the low pressure compressor 126 and components of the fan section 150. The LP shaft 138 is coaxial with the HP shaft 136 in this example embodiment. After driving each of the turbines 132, 134, the combustion products exit the turbomachine 120 through a turbomachine exhaust nozzle 140.

Accordingly, the turbomachine 120 defines a working gas flowpath or core duct 142 that extends between the core inlet 124 and the turbomachine exhaust nozzle 140. The core duct 142 is an annular duct positioned generally inward of the core cowl 122 along the radial direction R. The core duct 142 (e.g., the working gas flowpath through the turbomachine 120) may be referred to as a second stream.

The fan section 150 includes a fan 152, which is the primary fan in this example embodiment. For the depicted embodiment of FIG. 1, the fan 152 is an open rotor or unducted fan 152. In such a manner, the gas turbine engine 100 may be referred to as an open rotor engine.

As depicted, the fan 152 includes an array of fan blades 154 (only one shown in FIG. 3). The fan blades 154 are rotatable, e.g., about the longitudinal axis 112. As noted above, the fan 152 is drivingly coupled with the low pressure turbine 134 via the LP shaft 138. For the embodiments shown in FIG. 1, the fan 152 is coupled with the LP shaft 138 via a speed reduction gearbox 155, e.g., in an indirect-drive or geared-drive configuration.

Moreover, the array of fan blades 154 can be arranged in equal spacing around the longitudinal axis 112. Each fan blade 154 has a root and a tip and a span defined therebetween. Each fan blade 154 defines a central blade axis 156. For this embodiment, each fan blade 154 of the fan 152 is rotatable about its central blade axis 156, e.g., in unison with one another. One or more actuators 158 are provided to facilitate such rotation and therefore may be used to change a pitch of the fan blades 154 about their respective central blades' axes 156.

The fan section 150 further includes a fan guide vane array 160 that includes fan guide vanes 162 (only one shown in FIG. 3) disposed around the longitudinal axis 112. For this embodiment, the fan guide vanes 162 are not rotatable about the longitudinal axis 112. Each fan guide vane 162 has a root and a tip and a span defined therebetween. The fan guide vanes 162 may be unshrouded as shown in FIG. 1 or, alternatively, may be shrouded, e.g., by an annular shroud spaced outward from the tips of the fan guide vanes 162 along the radial direction R or attached to the fan guide vanes 162.

Each fan guide vane 162 defines a central blade axis 164. For this embodiment, each fan guide vane 162 of the fan guide vane array 160 is rotatable about its respective central blade axis 164, e.g., in unison with one another. One or more actuators 166 are provided to facilitate such rotation and therefore may be used to change a pitch of the fan guide vane 162 about its respective central blade axis 164. However, in other embodiments, each fan guide vane 162 may be fixed or unable to be pitched about its central blade axis 164. The fan guide vanes 162 are mounted to the fan cowl 170.

As shown in FIG. 3, in addition to the fan 152, which is unducted, a ducted fan 184 is included aft of the fan 152, such that the gas turbine engine 100 includes both a ducted and an unducted fan which both serve to generate thrust through the movement of air without passage through at least a portion of the turbomachine 120 (e.g., without passage through the HP compressor 128 and combustion section for the embodiment depicted). The ducted fan 184 is rotatable about the same axis (e.g., the longitudinal axis 112) as the fan blade 154. The ducted fan 184 is, for the embodiment depicted, driven by the low pressure turbine 134 (e.g. coupled to the LP shaft 138). In the embodiment depicted, as noted above, the fan 152 may be referred to as the primary fan, and the ducted fan 184 may be referred to as a secondary fan. It will be appreciated that these terms "primary" and "secondary" are terms of convenience, and do not imply any particular importance, power, or the like.

The ducted fan 184 includes a plurality of fan blades (not separately labeled in FIG. 1) arranged in a single stage, such that the ducted fan 184 may be referred to as a single stage fan. The fan blades of the ducted fan 184 can be arranged in equal spacing around the longitudinal axis 112. Each blade of the ducted fan 184 has a root and a tip and a span defined therebetween.

The fan cowl 170 annularly encases at least a portion of the core cowl 122 and is generally positioned outward of at least a portion of the core cowl 122 along the radial direction R. Particularly, a downstream section of the fan cowl 170 extends over a forward portion of the core cowl 122 to define a fan duct flowpath, or simply a fan duct 172. According to this embodiment, the fan flowpath or fan duct 172 may be understood as forming at least a portion of the third stream of the gas turbine engine 100.

Incoming air may enter through the fan duct 172 through a fan duct inlet 176 and may exit through a fan exhaust nozzle 178 to produce propulsive thrust. The fan duct 172 is an annular duct positioned generally outward of the core duct 142 along the radial direction R. The fan cowl 170 and the core cowl 122 are connected together and supported by a plurality of substantially radially-extending, circumferentially-spaced stationary struts 174 (only one shown in FIG. 3). The stationary struts 174 may each be aerodynamically contoured to direct air flowing thereby. Other struts in addition to the stationary struts 174 may be used to connect and support the fan cowl 170 and/or core cowl 122. In many embodiments, the fan duct 172 and the core duct 142 may at least partially co-extend (generally axially) on opposite sides (e.g., opposite radial sides) of the core cowl 122. For example, the fan duct 172 and the core duct 142 may each extend directly from a leading edge 144 of the core cowl 122 and may partially co-extend generally axially on opposite radial sides of the core cowl 122.

The gas turbine engine 100 also defines or includes an inlet duct 180. The inlet duct 180 extends between the engine inlet 182 and the core inlet 124/fan duct inlet 176. The engine inlet 182 is defined generally at the forward end of the fan cowl 170 and is positioned between the fan 152 and the fan guide vane array 160 along the axial direction A. The inlet duct 180 is an annular duct that is positioned inward of the fan cowl 170 along the radial direction R. Air flowing downstream along the inlet duct 180 is split, not necessarily evenly, into the core duct 142 and the fan duct 172 by a fan duct splitter or leading edge 144 of the core cowl 122. In the embodiment depicted, the inlet duct 180 is wider than the core duct 142 along the radial direction R. The inlet duct 180 is also wider than the fan duct 172 along the radial direction R.

Notably, for the embodiment depicted, the gas turbine engine 100 includes one or more features to increase an efficiency of a third stream thrust (e.g., a thrust generated by an airflow through the fan duct 172 exiting through the fan exhaust nozzle 178, generated at least in part by the ducted fan 184). In particular, the gas turbine engine 100 further includes an array of inlet guide vanes 186 positioned in the inlet duct 180 upstream of the ducted fan 184 and downstream of the engine inlet 182. The array of inlet guide vanes 186 are arranged around the longitudinal axis 112. For this embodiment, the inlet guide vanes 186 are not rotatable about the longitudinal axis 112. Each inlet guide vanes 186 defines a central blade axis (not labeled for clarity), and is rotatable about its respective central blade axis, e.g., in unison with one another. In such a manner, the inlet guide vanes 186 may be considered a variable geometry component. One or more actuators 188 are provided to facilitate such rotation and therefore may be used to change a pitch of the inlet guide vanes 186 about their respective central blade axes. However, in other embodiments, each inlet guide vanes 186 may be fixed or unable to be pitched about its central blade axis.

Further, located downstream of the ducted fan 184 and upstream of the fan duct inlet 176, the gas turbine engine 100 includes an array of outlet guide vanes 190. As with the array of inlet guide vanes 186, the array of outlet guide vanes 190 are not rotatable about the longitudinal axis 112. However, for the embodiment depicted, unlike the array of inlet guide vanes 186, the array of outlet guide vanes 190 are configured as fixed-pitch outlet guide vanes.

Further, it will be appreciated that for the embodiment depicted, the fan exhaust nozzle 178 of the fan duct 172 is further configured as a variable geometry exhaust nozzle. In such a manner, the gas turbine engine 100 includes one or more actuators 192 for modulating the variable geometry exhaust nozzle. For example, the variable geometry exhaust nozzle may be configured to vary a total cross-sectional area (e.g., an area of the nozzle in a plane perpendicular to the longitudinal axis 112) to modulate an amount of thrust generated based on one or more engine operating conditions (e.g., temperature, pressure, mass flowrate, etc. of an airflow through the fan duct 172). A fixed geometry exhaust nozzle may also be adopted.

The combination of the array of inlet guide vanes 186 located upstream of the ducted fan 184, the array of outlet guide vanes 190 located downstream of the ducted fan 184, and the fan exhaust nozzle 178 may result in a more efficient generation of third stream thrust during one or more engine operating conditions. Further, by introducing a variability in the geometry of the inlet guide vanes 186 and the fan exhaust nozzle 178, the gas turbine engine 100 may be capable of generating more efficient third stream thrust across a relatively wide array of engine operating conditions, including takeoff and climb (where a maximum total engine thrust is generally needed) as well as cruise (where a lesser amount of total engine thrust is generally needed).

The gas turbine engine 100, as noted above includes a primary fan, or rather fan 152 having fan blades 154, and a secondary fan, or rather ducted fan 184 having fan blades 185. Airflow from the fan 152 is split between a bypass passage 194 and the inlet duct 180 by an inlet splitter. Airflow from the ducted fan 184 is split between the fan duct 172 and the core duct 142 by the leading edge 144 (sometimes also referred to as a fan duct splitter). The gas turbine engine 100 in such a form defines a "first" stream through the bypass passage 194, a "second" stream through the core duct 142, and a "third" stream through the fan duct 172.

Moreover, referring still to FIG. 3, in exemplary embodiments, air passing through the fan duct 172 may be relatively cooler (e.g., lower temperature) than one or more fluids utilized in the turbomachine 120. In this way, one or more heat exchangers 196 may be positioned in thermal communication with the fan duct 172. For example, one or more heat exchangers 196 may be disposed within the fan duct 172 and utilized to cool one or more fluids from the core engine with the air passing through the fan duct 172, as a resource for removing heat from a fluid, e.g., compressor bleed air, oil or fuel.

Although not depicted, the heat exchanger 196 may be an annular heat exchanger extending substantially 360 degrees in the fan duct 172 (e.g., at least 300 degrees, such as at least 330 degrees). In such a manner, the heat exchanger 196 may effectively utilize the air passing through the fan duct 172 to cool one or more systems of the gas turbine engine 100 (e.g., lubrication oil systems, compressor bleed air, electrical components, etc.). The heat exchanger 196 uses the air passing through the fan duct 172 as a heat sink and correspondingly increases the temperature of the air downstream of the heat exchanger 196 and exiting the fan exhaust nozzle 178.

The gas turbine engine 100 includes a bleed valve system 200, 200'. The bleed valve system 200, 200' bleeds air from the core duct 142 between the LP compressor 126 and the HP compressor 128. As with the bleed valve system 80 of FIGS. 1-2, the bleed valve system 200, 200' includes a bleed valve 202, 202' a bleed valve exhaust duct 204, 204' fluidly connected to the bleed valve 202, 202' and a bleed valve exhaust nozzle 206, 206' fluidly connected to the bleed valve exhaust duct 204, 204'. The bleed valve exhaust nozzle 206, 206' may be disposed in the core cowl 122 or in the fan cowl 170, as described in further detail below. The bleed valve exhaust nozzle 206, 206' is fluidly separated from the exhaust section, specifically from the fan exhaust nozzle 178. In particular, the bleed valve exhaust nozzle 206, 206' extends aft of the exhaust section.

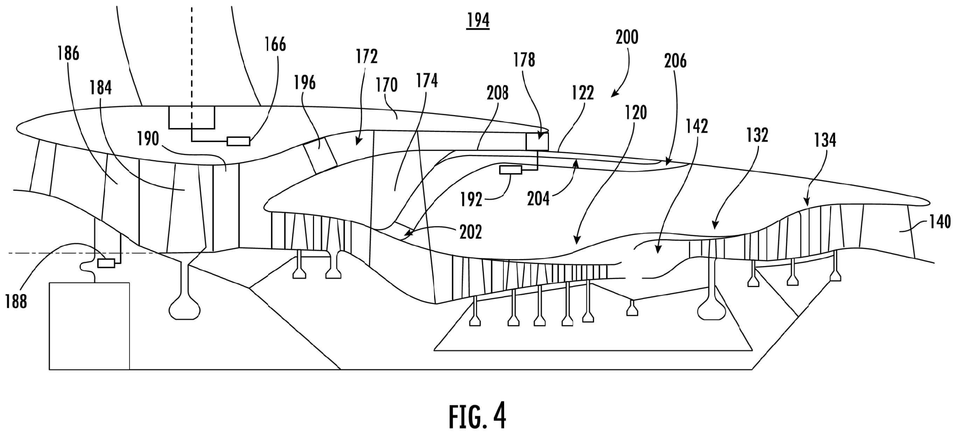

Now referring to FIG. 4, a magnified view of the gas turbine engine 100 is shown illustrating the bleed valve system 200. The bleed valve 202 bleeds air from the core duct 142 into the bleed valve exhaust duct 204. The bleed valve exhaust duct 204 extends along and radially inside an outer surface of the core cowl 122 to the bleed valve exhaust nozzle 206. The bleed valve exhaust nozzle 206 extends along an outer surface 208 of the core cowl 122 downstream of the fan exhaust nozzle 178. In such a form, the bleed valve system 200 defines a "fourth" stream of the gas turbine engine 100 fluidly separated from the streams through the bypass passage 194 (the first stream), the core duct 142 (the second stream), and the fan duct 172 (the third stream). In particular, the bleed valve exhaust nozzle 206 is disposed inward in the radial direction R from the fan exhaust nozzle 178 and outward in the radial direction R from the turbomachine exhaust nozzle 140, disposing the fourth stream between the second and third streams.

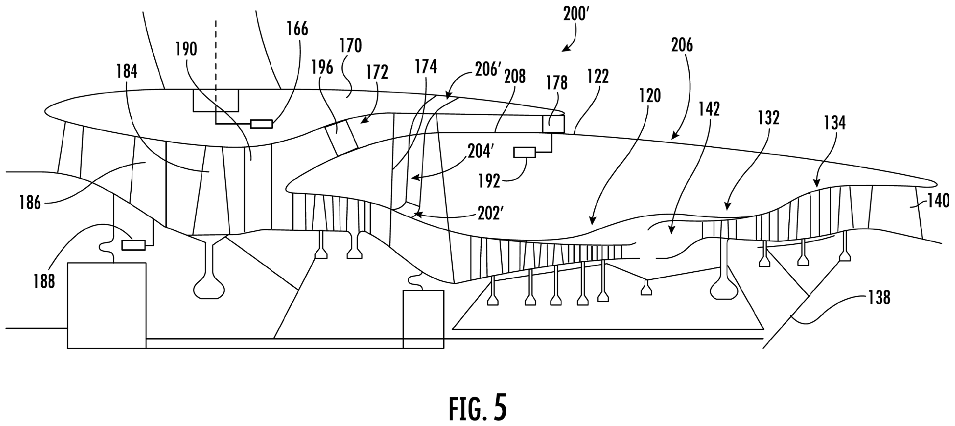

With reference to FIG. 5, a magnified view of a gas turbine engine 100' is provided illustrating a bleed valve system 200'. It will be appreciated that the components of the gas turbine engines 100, 100' and the bleed valve systems 200, 200' are identical in form and function, only differing in location and arrangement. Particularly, the bleed valve system 200' includes a bleed valve 202', a bleed valve exhaust duct 204' fluidly connected to the bleed valve 202', and a bleed valve exhaust nozzle 206' fluidly connected to the bleed valve exhaust duct 204'. In FIG. 5, the bleed valve exhaust nozzle 206' is disposed in the fan cowl 170, outward in the radial direction R from the fan exhaust nozzle 178 and the turbomachine exhaust nozzle 140. Specifically, the bleed valve exhaust duct 204' extends through the strut 174 to the fan cowl 170. In such a form, the strut 174 is hollow, and the bleed valve exhaust duct 204' extends outward in the radial direction R inside the strut 174. As shown in FIG. 5, the bleed valve exhaust duct 204' is disposed within the hollow strut 174.

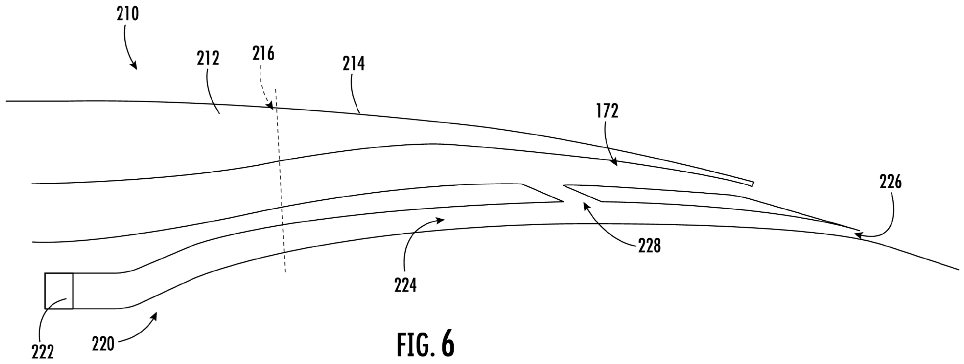

Now referring to FIG. 6, a cross-sectional view of another gas turbine engine 210 is provided. The gas turbine engine 210 includes a forward portion 212, an aft portion 214, and an engine-nacelle interface 216. The engine-nacelle interface 216 is connector that connects the forward portion 212 to the aft portion 214, such as a hinge or a sealed joint. The engine-nacelle interface 216 extends circumferentially around the gas turbine engine 210.

The gas turbine engine 210 includes a fan duct 172 and a bleed valve system 220 including a bleed valve 222, a bleed valve exhaust duct 224, and a bleed valve exhaust nozzle 226. In FIG. 6, the fan duct 172 and the bleed valve exhaust duct 224 are fluidly connected through a passage 228. The passage 228 allows air to flow from the fan duct 172 into the bleed valve exhaust duct 224, reducing air flow in the fan duct 172. That is, while the fan exhaust nozzle 178 and the bleed valve exhaust nozzle 226 are fluidly separated and isolated from each other, the fan duct 172 and the bleed valve exhaust duct 224 are fluidly connected. The increased air flow in the bleed valve exhaust duct 224 may improve operation of the gas turbine engine 100 by reducing stall in the bleed valve exhaust duct 224, which improves aerodynamic performance of the fourth stream and reduces overall fuel consumption. The flow from the fan duct 172 to the bleed valve exhaust duct 224 reduces risk of acoustic resonances occurring in an otherwise stalled bleed valve exhaust duct 224.

The passage 228 of FIG. 6 is disposed downstream of the engine-nacelle interface 230. By locating the passage 228 downstream of the engine-nacelle interface 216, air travels most of the way through the fan duct 172 before being directed into the bleed valve exhaust duct 224, reducing interference with upstream heat exchangers 196. In such a form, the passage 228 is placed downstream of the engine-nacelle interface 216 so that the fan duct 172 and the bleed valve exhaust duct 224 pass by the engine-nacelle interface 216.

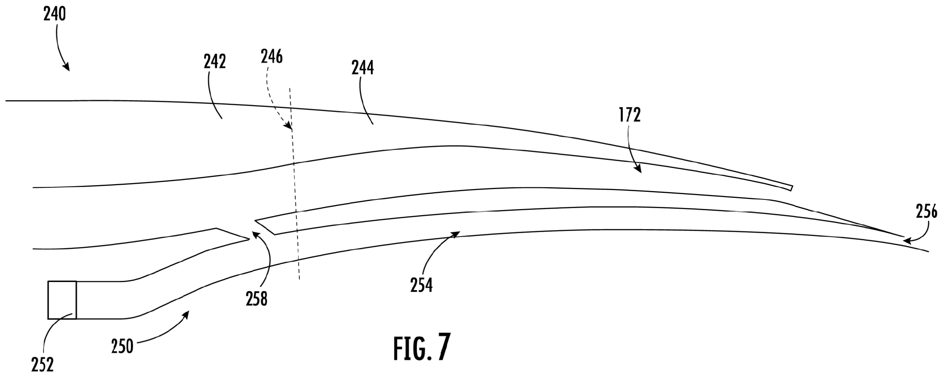

Now referring to FIG. 7, a cross-sectional view of another gas turbine engine 240 is provided. The gas turbine engine 240 includes a forward portion 242, an aft portion 244, and an engine-nacelle interface 246. The gas turbine engine 240 includes a fan duct 172 and a bleed valve system 250 including a bleed valve 252, a bleed valve exhaust duct 254, and a bleed valve exhaust nozzle 256. The fan duct 172 and the bleed valve exhaust duct 254 are connected with a passage 258. In FIG. 7, the passage 258 is disposed upstream of the engine-nacelle interface 246. By placing the passage 258 upstream of the engine-nacelle interface 246, the complexity of the overall design of the gas turbine engine 240 is reduced and acoustic treatment in the fan duct 172 is improved.

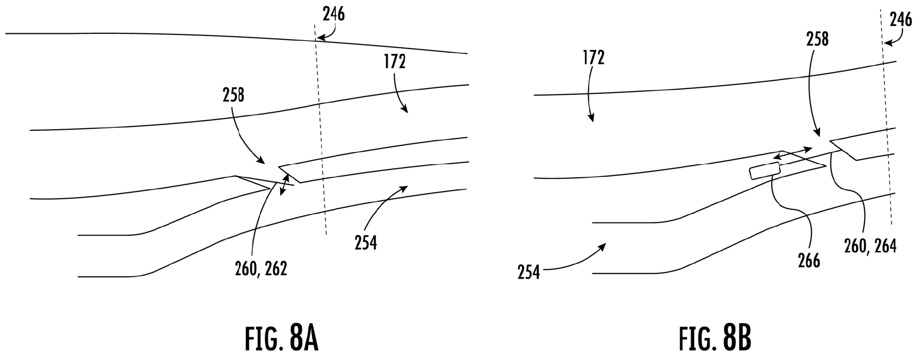

With reference to FIGS. 8A-8B, a magnified view of a passage 258 connecting a fan duct 172 and a bleed valve exhaust duct 254 of a bleed valve system 250 is provided. A flow regulator 260 is disposed in the passage to allow air flow from the fan duct 172 to the bleed valve exhaust duct 254 and to reduce or inhibit air flow from the bleed valve exhaust duct 254 to the fan duct 172. That is, the flow regulator 260 allows flow only in one direction: from the fan duct 172 to the bleed valve exhaust duct 254. The flow regulator 260 inhibits pressure buildup in the fan duct 172, which improves operation of the ducted fan 184.

In FIG. 8A, the flow regulator 260 is a valve 262, which may include at least one of a spring-loaded door, a solenoid valve, a check valve, a one-way valve, or combinations thereof. In FIG. 8B, the flow regulator 260 is a sliding door 264 that is actuatable by a linear actuator 266 to extend across the passage 258, allowing or restricting flow through the passage 258. The linear actuator 266 may be controlled by a dedicated controller (not shown) or may be connected or "ganged" to other variable geometry components, such as variable bleed valve doors. In such a form, actuation of the variable geometry components actuates the linear actuator 266 to move the sliding door 264 across the passage 258. Alternatively, the flow regulator 260 may be passively actuated by the pressure in the fan duct 172 being greater than the pressure in the bleed valve exhaust duct 254, such that the high pressure in the fan duct 172 pushes or urges the flow regulator 260 into actuation. Alternatively or additionally, the flow regulator 260 may be actively actuated by a controller (not shown) based on operation data, such as altitude data, pressure data outside the aircraft, pressure data in the fan duct 172 or combinations thereof.

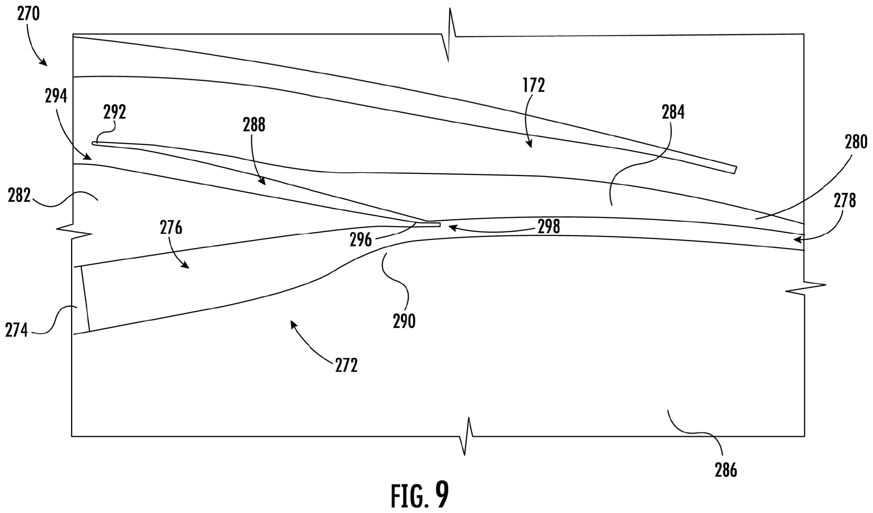

Now referring to FIG. 9, a cross-sectional view of another gas turbine engine 270 is provided. The gas turbine engine 270 includes a fan duct 172 and a bleed valve system 272 including a bleed valve 274, a bleed valve exhaust duct 276, and a bleed valve exhaust nozzle 278. The fan duct 172 and the bleed valve exhaust duct 276 separated by a core cowl 280. The core cowl 280 includes a forward portion 282, and aft portion 284, a base portion 286, and a passage 288 between the forward and aft portions 284, 286. The base portion 286 includes an extension 290 that narrows the bleed valve exhaust duct 276 toward the forward and aft portions 282, 284 of the core cowl 280. The passage 288 fluidly connects the fan duct 172 to the bleed valve exhaust duct 276.

The aft portion 284 of the core cowl 280 includes an inlet scoop 292 at an inlet 294 of the passage, and the forward portion 282 of the core cowl 280 includes an outlet scoop 296 at an outlet 298 of the passage 288. The inlet and outlet scoops 292, 296 direct air from the fan duct 172 into the bleed valve exhaust duct 276 through the passage 288 while inhibiting air from flowing through the passage 288 from the bleed valve exhaust duct 276 to the fan duct 172. In particular, the extension 290 of the base portion 286 and the outlet scoop 296 form a Venturi passage that increases the speed of the air in the bleed valve exhaust duct 276 past the outlet 298 of the passage 288. The increased speed decreases air pressure in the bleed valve exhaust duct 276, causing air flow from the fan duct 172 into the passage 288. The inlet scoop 292 is directed aft to further increase air flow into the fan duct 172. The inlet and outlet scoops 292, 296 and the extension 290 may be designed to provide a specified amount of air flow from the fan duct 172 into the passage 288, such as 0.1-20% of the total air flow in the fan duct 172, and to reduce or inhibit flow from the bleed valve exhaust duct 276 to the fan duct 172. Such flow from the bleed valve exhaust duct 276 to the fan duct 172, which may be called "back flow," may reduce aerodynamic performance and turbomachine operability and may increase fuel consumption and acoustic noise.

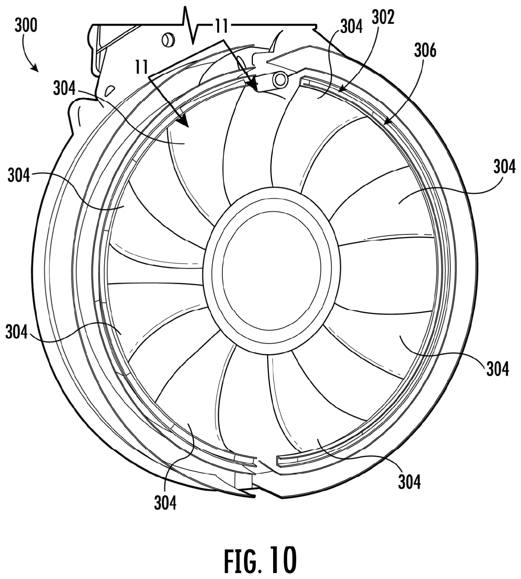

With reference to FIG. 10, an aft view of a bleed valve system 300 with an exemplary bleed valve exhaust duct 302 is provided. The bleed valve exhaust duct 302 includes a plurality of discrete ducts 304 arranged circumferentially around a bleed valve exhaust nozzle 306. In FIG. 10, eight ducts 304 are shown, and it will be appreciated that the bleed valve exhaust duct 302 may include a different number of ducts 304, such as six or ten. By separating the bleed valve exhaust duct 302 into discrete ducts 304, flow through the bleed valve exhaust duct 302 may be controlled more directly, such as by straightening the air flow into less turbulent flow through the ducts 304. Additionally, discrete ducts 304 address space constraints in the gas turbine engine 100 that may inhibit the use of a continuous, 360 degree duct. Such control improves air flow through the bleed valve exhaust duct 302 to the bleed valve exhaust nozzle 306.

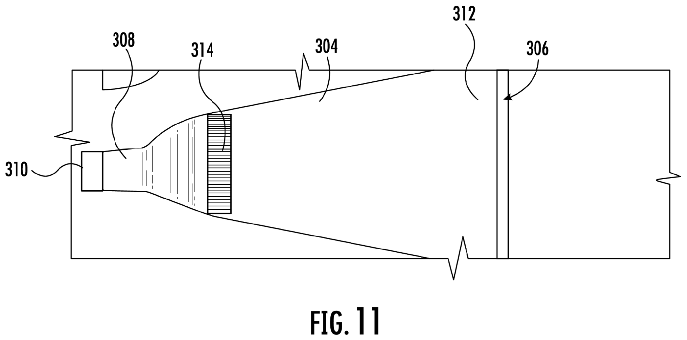

Now referring to FIG. 11, a magnified view of one of the ducts 304 is provided. The duct 304 includes a duct inlet 308 that is in fluid communication with a bleed valve 310 and a duct outlet 312 that is in fluid communication with the bleed valve exhaust nozzle 306. The duct 304 includes a flow straightener 314, such as a set of fins, grates, honeycombs, or the like, that aligns the flow of air from the duct inlet 308. It will be appreciated that flow straightener 314 is optional, and the duct 304 may include no devices between the duct inlet 308 and the duct outlet 312.

The duct 304 tapers from the duct outlet 312 to the duct inlet 308. That is, a width of the duct inlet 308 is narrower than a width of the duct outlet 312, and a width of the duct 304 expands from the duct inlet 308 to the duct outlet 312. The duct inlet 308 may be narrow to increase a speed of air flow from the bleed valve 310 into the duct 304, and the width expands to decrease the pressure of the air flow. The decreased pressure urges more air flow from the bleed valve 310 into the duct 304, which drives air flow to the duct outlet 312 and the bleed valve exhaust nozzle 306. Alternatively, not shown in FIG. 11, the duct inlet 308 may have a substantially same width between the duct inlet 308 and the duct outlet 312 to increase air flow rate through the duct 304.

The inventors of the present disclosure sought out a means to improve flow in a turbomachine of a gas turbine engine while reducing penalties caused by increased bleed valve flow. In particular, the inventors recognized that a bleed valve system with a dedicated bleed valve exhaust duct and a bleed valve exhaust nozzle can be used to achieve these goals.

The inventors discovered, unexpectedly, in the course of designing a bleed valve system with the above-noted structure, that relationships exist among: the maximum flow rate in the bleed valve system during operation and a core flow rate through the turbomachine; the maximum flow rate in the bleed valve system during operation and a flow rate through a fan duct; and an amount of flow in the fan duct that is bled into a bleed valve exhaust duct. Including the above-noted structure in accordance with one or more of the exemplary aspects described herein may result in a net benefit to the design of the gas turbine engine.

With the goal of arriving at an improved gas turbine engine, the inventors proceed in the manner of designing bleed valve systems having the above-noted structure with various air flow rates through specific components. In particular, the inventors discovered improvement of the output of the gas turbine engine when a ratio of the flow rate in the bleed valve system and the core flow rate through the turbomachine during a maximum VBV flow operating condition of the gas turbine engine is greater than 0% and less than or equal to 50% (i.e., less than or equal to 1:2). The flow rate in the bleed valve system is a flow rate in kilograms/ second at an inlet of the bleed valve system when the engine is operated in the maximum VBV flow operating condition, and the core flow rate through the turbomachine is a flow rate in kilograms/ second at an inlet to a high pressure compressor of the turbomachine when the engine is operated in the maximum VBV flow operating condition. The maximum VBV flow operating condition is an operating condition, up to operating at a rated speed, where a maximum amount of airflow is provided through the bleed valve system.

The inventors also discovered improvement of the output of the gas turbine engine when a ratio of the flow rate in the bleed valve system and the flow rate through the fan duct during the maximum VBV flow operating condition of the gas turbine engine is 50% or lower. The flow rate through the fan duct is a flow rate in kilograms/ second at an inlet to fan duct when the engine is operating at the maximum VBV flow operating condition. The inventors yet also discovered improvement of the output of the gas turbine engine when the amount of flow in the fan duct that is bled into the bleed valve exhaust duct is in a range from 0.1% to 20% of the flow rate through the fan duct (as measured at the inlet to the fan duct).

By providing a dedicated exhaust for a bleed valve system, operation of other components may be improved because the air flow from the bleed valve system can be independently removed. That is, air flow from the bleed valve system may interfere with other components, such as a ducted fan or a turbine, reducing overall output from a turbomachine. The dedicated exhaust, including an exhaust duct and an exhaust nozzle spaced from other nozzles, allows the bleed valve system to bleed air from a core duct of the turbomachine without interfering with the other components. Accordingly, the complex integration challenges with turbomachinery are reduced, and the system improves efficiency of spatial packaging. Additionally, the dedicated exhaust stream and nozzle allow improvement of ducted fans and boosters in a three-stream engine, reducing fuel consumption during transient operating conditions, such as takeoff and landing.

Further aspects are provided by the subject matter of the following clauses:

A bleed valve system for a gas turbine engine, the bleed valve system including a bleed valve, a bleed valve exhaust duct fluidly connected to the bleed valve, and a bleed valve exhaust nozzle fluidly connected to the bleed valve exhaust duct, wherein the bleed valve exhaust duct and the bleed valve exhaust nozzle are fluidly separated from an exhaust nozzle of the gas turbine engine when the bleed valve system is installed in the gas turbine engine.

The bleed valve system of any of the preceding clauses, wherein the gas turbine engine defines a radial direction, wherein the bleed valve exhaust nozzle is disposed outward in the radial direction from the exhaust nozzle when the bleed valve system is installed in the gas turbine engine.

The bleed valve system of any of the preceding clauses, wherein the gas turbine engine defines a radial direction, wherein the bleed valve exhaust nozzle is disposed inward in the radial direction from the exhaust nozzle when the bleed valve system is installed in the gas turbine engine.

The bleed valve system of any of the preceding clauses, wherein the gas turbine engine includes an exhaust section and the bleed valve exhaust nozzle is fluidly separated from the exhaust section when the bleed valve system is installed in the gas turbine engine.

The bleed valve system of any of the preceding clauses, wherein the gas turbine engine includes a fan duct including a fan exhaust nozzle, and the exhaust nozzle is the fan exhaust nozzle.

The bleed valve system of any of the preceding clauses, wherein the gas turbine engine includes a passage, and wherein the bleed valve exhaust duct is fluidly connected to the fan duct through the passage when the bleed valve system is installed in the gas turbine engine.

The bleed valve system of any of the preceding clauses, further including a flow regulator disposed in the passage, the flow regulator configured to allow air flow from the fan duct to the bleed valve exhaust duct and to prevent air flow from the bleed valve exhaust duct to the fan duct.

The bleed valve system of any of the preceding clauses, wherein the flow regulator is one of a door or a valve.

The bleed valve system of any of the preceding clauses, further including an actuator configured to extend the flow regulator across the passage.

The bleed valve system of any of the preceding clauses, wherein the bleed valve exhaust nozzle extends aft of an exhaust section of the gas turbine engine.

The bleed valve system of any of the preceding clauses, wherein the bleed valve exhaust nozzle is fluidly isolated from the exhaust nozzle.

The bleed valve system of any of the preceding clauses, wherein the bleed valve exhaust duct includes a plurality of discrete ducts arranged circumferentially around the bleed valve exhaust nozzle.

The bleed valve system of any of the preceding clauses, wherein each of the plurality of discrete ducts extends from a duct inlet to a duct outlet.

The bleed valve system of any of the preceding clauses, wherein the duct inlet is in fluid communication with the bleed valve.

The bleed valve system of any of the preceding clauses, wherein the duct outlet is in fluid communication with the bleed valve exhaust nozzle.

The bleed valve system of any of the preceding clauses, wherein each of the discrete ducts has a width that increases from the duct inlet to the duct outlet.

A gas turbine engine defining a radial direction, the gas turbine engine including a turbomachine including a turbomachine exhaust nozzle, a fan section including a fan duct and a fan exhaust nozzle, and a bleed valve system including a bleed valve fluidly connected to the turbomachine, a bleed valve exhaust duct fluidly connected to the bleed valve, and a bleed valve exhaust nozzle fluidly connected to the bleed valve exhaust duct, wherein the bleed valve exhaust duct and the bleed valve exhaust nozzle are fluidly separated from the turbomachine exhaust nozzle and the fan exhaust nozzle.

The gas turbine engine of any of the preceding clauses, wherein the fan section defines a bypass passage, wherein the bleed valve exhaust duct and the bleed valve exhaust nozzle are fluidly separated from the bypass passage.

The gas turbine engine of any of the preceding clauses, wherein the bleed valve exhaust nozzle is disposed outward in the radial direction from the fan exhaust nozzle.

The gas turbine engine of any of the preceding clauses, wherein the bleed valve exhaust nozzle is disposed inward in the radial direction from the fan exhaust nozzle.

The gas turbine engine of any of the preceding clauses, wherein the bleed valve exhaust duct and the fan duct are fluidly connected through a passage.

The gas turbine engine of any of the preceding clauses, wherein the bleed valve exhaust nozzle extends aft of the turbomachine exhaust nozzle.

The gas turbine engine of any of the preceding clauses, wherein the bleed valve exhaust nozzle extends aft of the fan exhaust nozzle.

The gas turbine engine of any of the preceding clauses, wherein the bleed valve exhaust nozzle is fluidly isolated from the fan exhaust nozzle and the turbomachine exhaust nozzle.

The gas turbine engine of any of the preceding clauses, wherein the bleed valve exhaust duct is fluidly isolated from the fan duct.

The gas turbine engine of any of the preceding clauses, wherein the turbomachine further includes a core cowl, and the passage extends through the core cowl.

The gas turbine engine of any of the preceding clauses, wherein the passage includes an inlet at the fan duct and an outlet at the bleed valve exhaust duct, wherein the core cowl includes an inlet scoop at the inlet and an outlet scoop at the outlet.

The gas turbine engine of any of the preceding clauses, wherein the core cowl includes an extension that defines a Venturi passage with the outlet scoop.

The gas turbine engine of any of the preceding clauses, wherein the turbomachine further includes a core cowl, wherein the bleed valve exhaust duct extends along an outer surface of the core cowl.

The gas turbine engine of any of the preceding clauses, wherein the passage, the inlet scoop, and the outlet scoop are configured to allow 0.1-20% of a total air flow of the fan duct through the passage.

The gas turbine engine of any of the preceding clauses, wherein the core cowl includes a forward portion, and aft portion, and a base portion.

The gas turbine engine of any of the preceding clauses, wherein the forward portion includes the inlet scoop and the rear portion includes the outlet scoop.

The gas turbine engine of any of the preceding clauses, wherein the base portion includes an extension that narrows the bleed valve exhaust duct toward the forward and aft portions.

A bleed valve system for a gas turbine engine, the bleed valve system comprising: a bleed valve; a bleed valve exhaust duct fluidly connected to the bleed valve; and a bleed valve exhaust nozzle fluidly connected to the bleed valve exhaust duct, wherein the bleed valve exhaust duct and the bleed valve exhaust nozzle are fluidly separated from an exhaust nozzle of the gas turbine engine when the bleed valve system is installed in the gas turbine engine.

The bleed valve system of any preceding clause, wherein the gas turbine engine defines a radial direction, wherein the bleed valve exhaust nozzle is disposed outward in the radial direction from the exhaust nozzle when the bleed valve system is installed in the gas turbine engine.

The bleed valve system of any preceding clause, wherein the gas turbine engine defines a radial direction, wherein the bleed valve exhaust nozzle is disposed inward in the radial direction from the exhaust nozzle when the bleed valve system is installed in the gas turbine engine.

The bleed valve system of any preceding clause, wherein the gas turbine engine includes an exhaust section and the bleed valve exhaust nozzle is fluidly separated from the exhaust section when the bleed valve system is installed in the gas turbine engine.

The bleed valve system of any preceding clause, wherein the gas turbine engine includes a fan duct including a fan exhaust nozzle, and the exhaust nozzle is the fan exhaust nozzle.

The bleed valve system of any preceding clause, wherein the gas turbine engine comprises a passage, and wherein the bleed valve exhaust duct is fluidly connected to the fan duct through the passage when the bleed valve system is installed in the gas turbine engine.

The bleed valve system of any preceding clause, further comprising a flow regulator disposed in the passage, the flow regulator configured to allow air flow from the fan duct to the bleed valve exhaust duct and to prevent air flow from the bleed valve exhaust duct to the fan duct.

The bleed valve system of any preceding clause, wherein the flow regulator is one of a door or a valve.

The bleed valve system of any preceding clause, wherein the bleed valve exhaust nozzle extends aft of an exhaust section of the gas turbine engine.

The bleed valve system of any preceding clause, wherein the bleed valve exhaust nozzle is fluidly isolated from the exhaust nozzle.

The bleed valve system of any preceding clause, wherein the bleed valve exhaust duct includes a plurality of discrete ducts arranged circumferentially around the bleed valve exhaust nozzle.

A gas turbine engine defining a radial direction, the gas turbine engine comprising: a turbomachine including a turbomachine exhaust nozzle; a fan section including a fan duct and a fan exhaust nozzle; and a bleed valve system comprising: a bleed valve fluidly connected to the turbomachine; a bleed valve exhaust duct fluidly connected to the bleed valve; and a bleed valve exhaust nozzle fluidly connected to the bleed valve exhaust duct, wherein the bleed valve exhaust duct and the bleed valve exhaust nozzle are fluidly separated from the turbomachine exhaust nozzle and the fan exhaust nozzle.

The gas turbine engine of any preceding clause, wherein the fan section defines a bypass passage, wherein the bleed valve exhaust duct and the bleed valve exhaust nozzle are fluidly separated from the bypass passage.

The gas turbine engine of any preceding clause, wherein the bleed valve exhaust nozzle is disposed outward in the radial direction from the fan exhaust nozzle.

The gas turbine engine of any preceding clause, wherein the bleed valve exhaust nozzle is disposed inward in the radial direction from the fan exhaust nozzle.

The gas turbine engine of any preceding clause, wherein the bleed valve exhaust duct and the fan duct are fluidly connected through a passage.

The gas turbine engine of any preceding clause, wherein the turbomachine further comprises a core cowl, and the passage extends through the core cowl.

The gas turbine engine of any preceding clause, wherein the passage includes an inlet at the fan duct and an outlet at the bleed valve exhaust duct, wherein the core cowl includes an inlet scoop at the inlet and an outlet scoop at the outlet.

The gas turbine engine of any preceding clause, wherein the core cowl includes an extension that defines a Venturi passage with the outlet scoop.

The gas turbine engine of any preceding clause, wherein the bleed valve exhaust nozzle extends aft of at least one of the fan exhaust nozzle or the turbomachine exhaust nozzle.

This written description uses examples to disclose the present disclosure, including the best mode, and also to enable any person skilled in the art to practice the disclosure, including making and using any devices or systems and performing any incorporated methods. The patentable scope of the disclosure is defined by the claims, and may include other examples that occur to those skilled in the art. Such other examples are intended to be within the scope of the claims if they include structural elements that do not differ from the literal language of the claims, or if they include equivalent structural elements with insubstantial differences from the literal languages of the claims.

## Claims

1. A bleed valve system (80, 200, 300) for a gas turbine engine (10, 100, 100', 210, 240, 270), the bleed valve system (80, 200, 300) comprising:
a bleed valve (202, 202', 82, 222, 252, 262, 274, 310);
a bleed valve exhaust duct (204, 304) fluidly connected to the bleed valve (202, 202', 82, 222, 252, 262, 274, 310); and
a bleed valve exhaust nozzle (206, 306) fluidly connected to the bleed valve exhaust duct (204, 304),
wherein the bleed valve exhaust duct (204, 304) and the bleed valve exhaust nozzle (206, 306) are fluidly separated from an exhaust nozzle of the gas turbine engine (10, 100, 100', 210, 240, 270) when the bleed valve system (80, 200, 300) is installed in the gas turbine engine (10, 100, 100', 210, 240, 270).

2. The bleed valve system (80, 200, 300) of claim 1, wherein the gas turbine engine (10, 100, 100', 210, 240, 270) defines a radial direction, wherein the bleed valve exhaust nozzle (206, 306) is disposed outward in the radial direction from the exhaust nozzle when the bleed valve system (80, 200, 300) is installed in the gas turbine engine (10, 100, 100', 210, 240, 270).

3. The bleed valve system (80, 200, 300) of claim 1, wherein the gas turbine engine (10, 100, 100', 210, 240, 270) defines a radial direction, wherein the bleed valve exhaust nozzle (206, 306) is disposed inward in the radial direction from the exhaust nozzle when the bleed valve system (80, 200, 300) is installed in the gas turbine engine (10, 100, 100', 210, 240, 270).

4. The bleed valve system (80, 200, 300) of any one of the preceding claims, wherein the gas turbine engine (10, 100, 100', 210, 240, 270) includes an exhaust section (54) and the bleed valve exhaust nozzle (206, 306) is fluidly separated from the exhaust section (54) when the bleed valve system (80, 200, 300) is installed in the gas turbine engine (10, 100, 100', 210, 240, 270).

5. The bleed valve system (80, 200, 300) of any one of the preceding claims, wherein the gas turbine engine (10, 100, 100', 210, 240, 270) includes a fan duct (172) including a fan exhaust nozzle (178), and the exhaust nozzle is the fan exhaust nozzle (178).

6. The bleed valve system (80, 200, 300) of claim 5, wherein the gas turbine engine (10, 100, 100', 210, 240, 270) comprises a passage (194, 228, 258, 288), and wherein the bleed valve exhaust duct (204, 304) is fluidly connected to the fan duct (172) through the passage (194, 228, 258, 288) when the bleed valve system (80, 200, 300) is installed in the gas turbine engine (10, 100, 100', 210, 240, 270).

7. The bleed valve system (80, 200, 300) of claim 6, further comprising a flow regulator (260) disposed in the passage (194, 228, 258, 288), the flow regulator (260) configured to allow air flow from the fan duct (172) to the bleed valve exhaust duct (204, 304) and to prevent air flow from the bleed valve exhaust duct (204, 304) to the fan duct (172).

8. The bleed valve system (80, 200, 300) of claim 7, wherein the flow regulator (260) is one of a door (264) or a valve (262).

9. The bleed valve system (80, 200, 300) of any one of the preceding claims, wherein the bleed valve exhaust nozzle (206, 306) extends aft of an exhaust section (54) of the gas turbine engine (10, 100, 100', 210, 240, 270).

10. The bleed valve system (80, 200, 300) of any one of the preceding claims, wherein the bleed valve exhaust nozzle (206, 306) is fluidly isolated from the exhaust nozzle.

11. The bleed valve system (80, 200, 300) of any one of the preceding claims, wherein the bleed valve exhaust duct (204, 304) includes a plurality of discrete ducts arranged circumferentially around the bleed valve exhaust nozzle (206, 306).

12. A gas turbine engine (10, 100, 100', 210, 240, 270) defining a radial direction, the gas turbine engine (10, 100, 100', 210, 240, 270) comprising:
a turbomachine (16, 120) including a turbomachine (16, 120) exhaust nozzle;
a fan section (150) including a fan duct (172) and a fan exhaust nozzle (178); and
a bleed valve system (80, 200, 300) comprising:
a bleed valve (202, 202', 82, 222, 252, 262, 274, 310) fluidly connected to the turbomachine (16, 120);
a bleed valve exhaust duct (204, 304) fluidly connected to the bleed valve (202, 202', 82, 222, 252, 262, 274, 310); and
a bleed valve exhaust nozzle (206, 306) fluidly connected to the bleed valve exhaust duct (204, 304),
wherein the bleed valve exhaust duct (204, 304) and the bleed valve exhaust nozzle (206, 306) are fluidly separated from the turbomachine (16, 120) exhaust nozzle and the fan exhaust nozzle (178).

13. The gas turbine engine (10, 100, 100', 210, 240, 270) of claim 12, wherein the fan section (150) defines a bypass passage (194, 228, 258, 288), wherein the bleed valve exhaust duct (204, 304) and the bleed valve exhaust nozzle (206, 306) are fluidly separated from the bypass passage (194, 228, 258, 288).

14. The gas turbine engine (10, 100, 100', 210, 240, 270) of any one of claims 12-13, wherein the bleed valve exhaust nozzle (206, 306) is disposed outward in the radial direction from the fan exhaust nozzle (178).

15. The gas turbine engine (10, 100, 100', 210, 240, 270) of any one of claims 12-13, wherein the bleed valve exhaust nozzle (206, 306) is disposed inward in the radial direction from the fan exhaust nozzle (178).
